# EUROPEAN PATENT SPECIFICATION

(11) **EP 4 331 245 B1**
(45) Date of publication and mention of the grant of the patent: **09.07.2025**
(21) Application number: 21722175.3
(22) Date of filing: 26.04.2021
(51) Int. Cl.: H04W 4/80, H04W 4/20, H04W 72/12, H04L 5/00, H04W 84/12

(54) **BEACON COORDINATION FOR WIRELESS SENSING**
BAKENKOORDINATION FÜR DRAHTLOSE ERFASSUNG
COORDINATION DE BALISE POUR DÉTECTION SANS FIL

(43) Date of publication of application: 06.03.2024
(73) Proprietor: Telefonaktiebolaget LM Ericsson (publ), 164 83 Stockholm (SE)
(72) Inventor: MAX, Sebastian, 50737 Köln (DE); WILHELMSSON, Leif, 222 20 Lund (SE); LOPEZ, Miguel, 52074 Aachen (DE)
(74) Representative: Ericsson
(86) International application number: PCT/EP2021/060821
(87) International publication number: WO 2022/228648

(56) References cited:
- EP-A1- 2 285 027
- EP-A1- 3 454 270
- US-A1- 2013 121 205
- US-A1- 2014 056 192
- US-A1- 2014 140 208
- US-A1- 2014 226 505
- US-A1- 2017 359 804
- SPIRENT COMMUNICATIONS ET AL: "Change WLAN measurement reporting delay to 20 seconds", vol. RAN WG4, no. Athens, Greece; 20180226 - 20180302, 14 March 2018 (2018-03-14), XP051509407, Retrieved from the Internet <URL:http://www.3gpp.org/ftp/tsg%5Fran/TSG%5FRAN/TSGR%5F79/Docs/RP%2D180297%2Ezip> [retrieved on 20180314]

## Description

### Technical Field

The present invention relates to methods for controlling operations in a wireless communication system and to corresponding devices, systems, and computer programs.

### Background

A technology in which a receiver tracks characteristics of received signals to infer spatial information about the environment in which the signal propagates is also denoted as "wireless sensing". Wireless sensing may for example be utilized to detect presence of objects, movement of objects, and/or locations of objects. It may operate in a similar manner as radar, however instead of using an active transmitter, wireless sensing is based on overhearing active transmissions from other devices. An exemplary use case of wireless sensing is presence sensing in home automations, where the information delivered by wireless sensing can be used for controlling light and/or other home automation equipment. Enabling wireless sensing is for example considered for WLAN (Wireless Local Area Network) systems according to the IEEE 802.11 standards family, e.g., as specified in "IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2016 (Revision of IEEE Std 802.11-2012) (12-2016), in the following denoted as "IEEE 802.11 Specifications".

In the IEEE 802.11 technology, wireless communication devices are typically termed as "station" (STA), and such STAs may be classified into Access Point STAs (AP STAs) and non-Access Point STAs (non-AP STAs). The AP STAs are sometimes also referred to as Access Points (APs). In many cases, APs offer more capabilities than non-AP STAs. For example, in the upcoming 802.11be amendment of the IEEE 802.11 technology, it is envisaged that APs may support up to 320 MHz bandwidth in the 6 GHz band. As compared to that non-AP STAs may support a bandwidth of only 20 MHz. Further, APs often have considerably higher output power than non-AP STAs. Yet another difference is that an AP typically has a larger number of antennas than a non-AP STA. As an example, an AP may have eight or even sixteen antennas, while a non-AP STA often does not have more than two antennas.

Concerning wireless sensing, one possibility is to transmit dedicated signals, e.g., frames or packets, which can then be measured as part of a wireless sensing procedure. However, such usage of dedicated signals may result in excessive utilization of resources. Accordingly, another approach involves basing the wireless sensing on measurements performed on data frames or control frames of regular wireless communications. An example of frames which can be used for this purpose are so-called beacon frames, also referred to as beacons. In the IEEE 802.11, each AP sends beacons to announce presence of a Basic Service Set (BSS) as well as operation parameters and capabilities of the BSS. Typically, the AP sends the beacons in a periodic manner, every 102.4 ms for every BSS served by the AP.

In some scenarios, e.g., in enterprise premises, a large number of APs may be deployed to provide a desired coverage. This typically results in a large number of frequent beacon transmissions. These beacon transmissions could be used in an efficient manner for performing wireless sensing. In that case, the periodic nature of the beacon transmissions may also match the requirements of many use cases of wireless sensing, such as intruder detection or fall detection.

In deployments with many APs, neighboring APs typically use different wireless channels in order to completely avoid, or at least reduce, mutual interference. If a non-AP STA is associated with one of the APs, this has the effect that the non-AP STA would monitor the beacons sent on the wireless channel used by the AP to which the non-AP STA is associated. This may result in inefficient utilization of wireless sensing possibilities.

US2017/359804A1 discloses a method and a system for sensing objects using wireless beacon signals sent on a dedicated beacon channel. It is not related to adapating beacon timings.

US2014/226505A1 discloses to instruct stations about when to perform interference measurements in order to perform channel selection. Stations may report beacon timing to APs.

Accordingly, there is a need for techniques which allow for enhancing wireless sensing in a wireless communication network using multiple wireless channels.

### Summary

The present invention provides a method according to claim 1, a method according to claim 6, a wireless station according to claim 11, and an AP according to claim 13. The dependent claims define further embodiments.

According to an embodiment, a method of controlling operations in a wireless communication system is provided. According to the method, a wireless station associates to an AP of the wireless communication system. The AP operates on a first wireless channel. While the wireless station is associated to the AP, the wireless station receives periodically transmitted beacons on one or more second wireless channels, which are different from the first wireless channel. Based on the received beacons, the wireless station performs measurements for sensing one or more objects in an environment of the wireless station. Based on the measurements, the wireless station evaluates presence, location, and/or movement of the one or more human beings or animals in the environment of the wireless station.

According to a further embodiment, a method of controlling operations in a wireless communication system is provided. According to the method, an AP of the wireless communication system periodically transmits beacons on a first wireless channel. Further, the AP estimates a timing of one or more beacons periodically transmitted on one or more second wireless channels, which are different from the first wireless channel. Based on the estimated timing, the AP coordinates the timing of transmitting the beacons on the first wireless channel with the timing of transmitting the beacons on the one or more second wireless channels. The AP receives one or more reports from at least one wireless station associated to the AP. The one or more reports indicate results of measurements for sensing one or more human beings or animals in an environment of the at least one wireless station. The measurements are based on at least some of the beacons transmitted on the one or more second wireless channels. Based on the reported results, the AP evaluates presence, location, and/or movement of the one or more human beings or animals in the environment of the wireless station

According to a further embodiment, a wireless station is provided. The wireless station is configured to associate to an AP of the wireless communication system. The AP operates on a first wireless channel. Further, the wireless station is configured to, while the wireless station is associated to the AP, receive periodically transmitted beacons on one or more second wireless channels, which are different from the first wireless channel. Further, the wireless station is configured to, based on the received beacons, perform measurements for sensing one or more objects in an environment of the wireless station. Further, the wireless station is configured to, based on the measurements, evaluate presence, location, and/or movement of the one or more human beings or animals in the environment of the wireless station.

According to a further embodiment, a wireless station is provided. The wireless station comprises at least one processor and a memory. The memory contains instructions executable by said at least one processor, whereby the wireless station is operative to associate to an AP of the wireless communication system. The AP operates on a first wireless channel. Further, the memory contains instructions executable by said at least one processor, whereby the wireless station is operative to, while the wireless station is associated to the AP, receive periodically transmitted beacons on one or more second wireless channels, which are different from the first wireless channel. Further, the memory contains instructions executable by said at least one processor, whereby the wireless station is operative to, based on the received beacons, perform measurements for sensing one or more objects in an environment of the wireless station. Further, the memory contains instructions executable by said at least one processor, whereby the wireless station is operative to, based on the measurements, evaluate presence, location, and/or movement of the one or more human beings or animals in the environment of the wireless station.

According to a further embodiment, an AP is provided. The AP is configured to periodically transmit beacons on a first wireless channel. Further, the AP is configured to estimate a timing of one or more beacons periodically transmitted on one or more second wireless channels, which are different from the first wireless channel. Further, the AP is configured to, based on the estimated timing, coordinate the timing of transmitting the beacons on the first wireless channel with the timing of transmitting the beacons on the one or more second wireless channels. Further, the AP is configured to, receive one or more reports from at least one wireless station associated to the AP. The one or more reports indicate results of measurements for sensing one or more human beings or animals in an environment of the at least one wireless station, and the measurements being are on at least some of the beacons transmitted on the one or more second wireless channels. Further, the AP is configured to, based on the reported results, evaluate presence, location, and/or movement of the one or more human beings or animals in the environment of the wireless station.

According to a further embodiment, an AP is provided. The AP comprises at least one processor and a memory. The memory contains instructions executable by said at least one processor, whereby the AP is operative to transmit beacons on a first wireless channel. Further, the AP memory contains instructions executable by said at least one processor, whereby the AP is operative to estimate a timing of one or more beacons periodically transmitted on one or more second wireless channels, which are different from the first wireless channel. Further, the AP memory contains instructions executable by said at least one processor, whereby the AP is operative to, based on the estimated timing, coordinate the timing of transmitting the beacons on the first wireless channel with the timing of transmitting the beacons on the one or more second wireless channels. Further, the AP memory contains instructions executable by said at least one processor, whereby the AP is operative to receive one or more reports from at least one wireless station associated to the AP. The one or more reports indicate results of measurements for sensing one or more human beings or animals in an environment of the at least one wireless station, and the measurements being are on at least some of the beacons transmitted on the one or more second wireless channels. Further, the AP memory contains instructions executable by said at least one processor, whereby the AP is operative to, based on the reported results, evaluate presence, location, and/or movement of the one or more human beings or animals in the environment of the wireless station.

According to a further embodiment, a computer program or computer program product is provided, e.g., in the form of a non-transitory storage medium, which comprises program code to be executed by at least one processor of a wireless station is provided. Execution of the program code causes the wireless station to associate to an AP of the wireless communication system. The AP operates on a first wireless channel. Further, execution of the program code causes the wireless station to, while the wireless station is associated to the AP, receive periodically transmitted beacons on one or more second wireless channels, which are different from the first wireless channel. Further, execution of the program code causes the wireless station to, based on received beacons, perform measurements for sensing one or more objects in an environment of the wireless station. Further, execution of the program code causes the wireless station to, based on the measurements, evaluate presence, location, and/or movement of the one or more human beings or animals in the environment of the wireless station.

According to a further embodiment, a computer program or computer program product is provided, e.g., in the form of a non-transitory storage medium, which comprises program code to be executed by at least one processor of an AP is provided. Execution of the program code causes the AP to periodically transmit beacons on a first wireless channel. Further, execution of the program code causes the AP to estimate a timing of one or more beacons periodically transmitted on one or more second wireless channels, which are different from the first wireless channel. Further, execution of the program code causes the AP to, based on the estimated timing, coordinate the timing of transmitting the beacons on the first wireless channel with the timing of transmitting the beacons on the one or more second wireless channels. Further, execution of the program code causes the AP to receive one or more reports from at least one wireless station associated to the AP. The one or more reports indicate results of measurements for sensing one or more human beings or animals in an environment of the at least one wireless station, and the measurements being are on at least some of the beacons transmitted on the one or more second wireless channels execution of the program code causes the AP to, based on the reported results, evaluate presence, location, and/or movement of the one or more human beings or animals in the environment of the wireless station.

Details of such embodiments and further embodiments will be apparent from the following detailed description of embodiments.

### Brief Description of the Drawings

Fig. 1 schematically illustrates a wireless communication system according to an embodiment.
Fig. 2 schematically illustrates an example of a scenario in which wireless sensing is performed in accordance with an embodiment.
Fig. 3 schematically illustrates an example of beacon timings coordinated in accordance with an embodiment.
Fig. 4 schematically illustrates processes involving wireless sensing in accordance with an embodiment.
Fig. 5 shows a flowchart for schematically illustrating a method according to an embodiment.
Fig. 6 shows a block diagram for schematically illustrating functionalities of a wireless station according to an embodiment.
Fig. 7 shows a flowchart for schematically illustrating a method according to an embodiment.
Fig. 8 shows a block diagram for schematically illustrating functionalities of an AP according to an embodiment.
Fig. 9 schematically illustrates structures of a wireless station according to an embodiment.
Fig. 10 schematically illustrates structures of an AP according to an embodiment.

### Detailed Description of Embodiments

In the following, concepts in accordance with exemplary embodiments of the invention will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio), or NB loT (Narrowband Internet of Things) technology specified by 3GPP (3^{rd} Generation Partnership Project). The illustrated concepts may be implemented by various types of wireless communication devices, in particular by APs and/or by STAs. Here, it is noted that the STAs may be non-AP STAs, but that in some scenarios operations described below as being performed by a STA could also be performed by an AP STA, e.g., if the AP STA operates in a relaying mode, e.g., as a range extender or mesh network node.

In the illustrated concepts, a STA associated to an AP operating on a certain wireless channel can use beacons transmitted on one or more other wireless channels to perform wireless sensing. In the following description such wireless channels are also referred to as "channel". Each wireless channel may correspond to a certain frequency or frequency range and may thus also be termed as a frequency channel. In the illustrated concepts, the STA can thus utilize beacons sent by different APs operating on different wireless channels for improving its wireless sensing performance. This improvement in wireless sensing performance can be achieved by making more wireless transmissions available to be used as a basis for the wireless sensing. As a result, environment variations can be sensed over larger areas and/or with higher precision. The usage of beacons from different APs may be aided by coordinating the beacon transmissions from the different APs. In particular, the beacon transmissions by multiple APs may be time aligned in such a way that they can be used for wireless sensing by a STA associated to one of the APs, e.g., by avoiding time overlap of the beacon transmissions. Accordingly, the STA may change its receiver frequency in between the beacon transmissions and efficiently use the beacon transmissions for wireless sensing, even if the beacon transmissions occur on different wireless channels. Further, the STA may inform the AP it is associated to about its intention to use beacons from other APs for wireless sensing, such that the AP can take this into consideration when scheduling data for the STA. Further, the STA may also assist in coordinating the beacon transmissions, e.g., by informing the AP about the timing of beacons received from other APs.

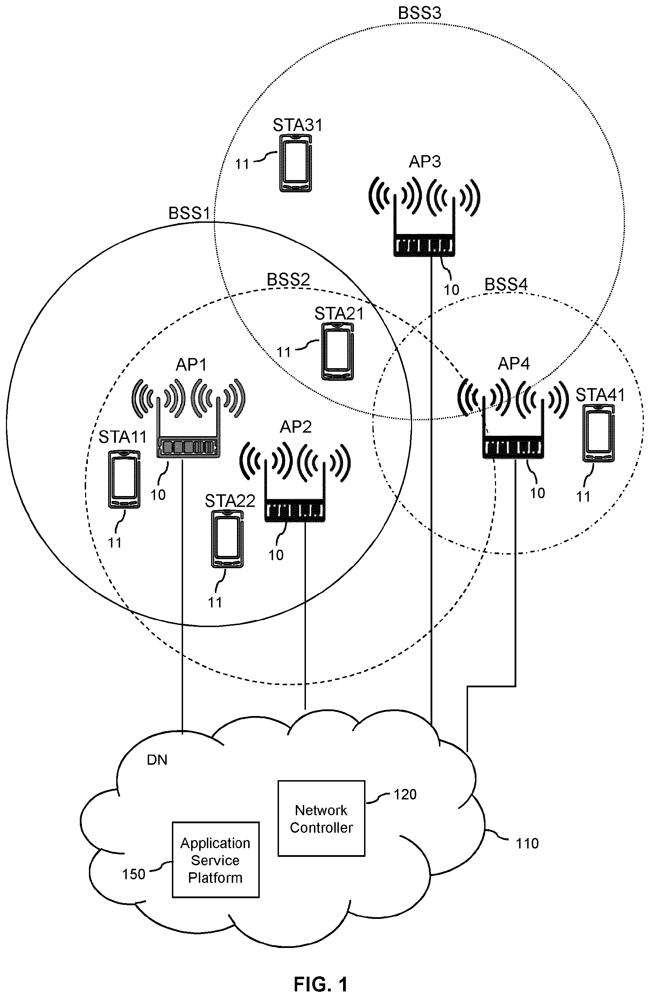

Fig. 1 illustrates an exemplary wireless communication system according to an embodiment. In the illustrated example, the wireless communication system includes multiple access points (APs) 10, in the illustrated example referred to as AP1, AP2, AP3, AP4, and multiple STAs 11, in the illustrated example referred to as STA11, STA21, STA22, STA31, and STA41. STA11 is served by AP1 (in a first BSS denoted as BSS1), STA21 and STA22 are served by AP2 (in a second BSS denoted as BSS2). The STA31 is served by AP3 (in a third BSS denoted as BSS3). The STA41 is served by AP4 (in a fourth BSS denoted as BSS4).The STAs 11 may correspond to various kinds of wireless devices, for example user terminals, such as mobile or stationary computing devices like smartphones, laptop computers, desktop computers, tablet computers, gaming devices, or the like. Further, the STAs 11 could for example correspond to other kinds of equipment like smart home devices, printers, multimedia devices, data storage devices, or the like.

In the example of Fig. 1, each of the STAs 11 may connect through a radio link to one of the APs 10. For example depending on location or channel conditions experienced by a given STA 11, the STA 11 may select an appropriate AP 10 and BSS for establishing the radio link.

Each AP 10 may provide data connectivity of the STAs 11 connected to the AP 10. As further illustrated, the APs 10 may be connected to a data network (DN) 110. The DN 110 may include a network controller 120 which controls and otherwise manages operation of the APs 10, e.g., with respect to utilization of channels. In this way, the APs 10 may also provide data connectivity of STAs 11 connected to different APs 10. Further, the APs 10 may also provide data connectivity of the STAs 11 to other entities, e.g., to one or more servers, service providers, data sources, data sinks, user terminals, or the like. Accordingly, the radio link established between a given STA 11 and its serving AP 10 may be used for providing various kinds of services to the STA 11, e.g., a voice service, a multimedia service, or other data service. Such services may be based on applications which are executed on the STA 11 and/or on a device linked to the STA 11. By way of example, Fig. 1 illustrates an application service platform 150 provided in the DN 110. The application(s) executed on the STA 11 and/or on one or more other devices linked to the STA 11 may use the radio link for data communication with one or more other STAs 11 and/or the application service platform 150, thereby enabling utilization of the corresponding service(s) at the STA 11. In some cases, such service(s) may be based on results obtained by wireless sensing performed by one or more of the STAs 11. For example, such service could use the wireless sensing to implement intruder detection or fall detection in the environment of the STA(s) 11.

In an environment as for example illustrated by Fig. 1, the multiple APs 10 may be deployed to provide wireless coverage of a certain area. In such cases, the APs 10 typically use separate channels, in particular different frequency channels, to avoid or reduce interference between the transmissions to or from the different APs 10. Such deployment using different frequency channels my help to achieve a higher total capacity of the wireless communication network in this area. The selection of the frequency channel may be accomplished manually by the operator of the AP(s) 10 or automatically by the AP(s) 10 using a frequency selection algorithm. Once the AP 10 has selected its operating channel, it starts to transmit beacons on this channel. This is typically accomplished in a periodic manner. In the IEEE 802.11 technology, a default period of transmitting the beacons for a certain BSS is 102.4 ms. However, configuration of other periods is possible as well.

In the IEEE 802.11 technology, transmission of the beacon may work as follows: At every target beacon transmission time (TBTT), the AP 10 initiates a channel access procedure for the beacon transmission, using the highest priority access category. This typically involves that, before sending the beacon, the AP 10 senses the channel for a certain time and delays transmission of the beacon until the channel becomes idle. This typically has the effect that APs 10 located close vicinity of each other and using the same channel will transmit the beacons in a non-overlapping manner.

If APs 10 operate on different channels or if APs 10 are located sufficiently far from each other, it may however occur that the beacon transmissions by different APs 10 overlap in time. For a STA 11 that is associated to one of the APs 10 this typically has no consequences, as the STA 11 is mainly interested in the beacons of the AP 10 it is associated to, e.g., to ensure it is still connected. However, for a STA 11 that performs wireless sensing, the time overlap beacon transmissions from different APs 10 within range of the STA 11 may limit the STA's 11 ability to use the beacons for performing wireless sensing.

In the claimed solution, the beacon transmissions by the different APs 10 may be coordinated in such a way that the individual TBTTs of the APs 10 are scattered over time, so that a STA 11 performing wireless sensing can receive as many of these beacons as possible for basing the wireless sensing on these received beacons. This may be achieved in the following way: Before the starting to transmit beacons, an AP 10 determines the TBTTs of active surrounding APs 10.

According to one option, if the AP 10 and its surrounding APs 10 belong to the same operator and are steered by a centralized network controller, such as the above mentioned network controller 120, the network controller can maintain a TBTT offset list indicating time offsets between the TBTTs to applied by the APs 10. If a new AP 10 is added to the environment, the network controller may indicate the TBTT offsets to the new AP 10. Further, the central controller may supplement the TBTT offsets with information indicating which other APs 10 are in close vicinity, e.g., within a certain distance range, from the new AP 10, and/or a synchronization time reference, e.g., in terms of a time stamp. For example, such synchronization time reference could indicate a starting point of a common time cycle to be applied by each of the APs 10 for controlling the periodic transmission of the beacons, with the TBTT offsets indicating different time instances within such common time cycle. Having received such information, the new AP 10 may determine the next TBTT which allows transmission of a beacon without time overlap with beacon transmissions by the other APs 10 and return the corresponding TBTT offset to the network controller. The new AP 10 may then continue to periodically transmit beacons according to the time cycle and the determined TBTT offset.

According to a further option, if there is no central network controller or if there are surrounding APs 10 which are not controlled by the same network controller, e.g., in cases of APs 10 belonging do different operators, the APs 10 can coordinate their respective TBTTs using over-the-air coordination. For APs 10 using the same channel, such coordination could be based on the mesh beacon collision avoidance (MBCA) protocol specified in IEEE P802.11-REVmd/D5.0 (September 2020). Specifically, the MBCA protocol may be used to disseminate the expected future TBTTs of the APs 10 to other APs 10 within the range of two hops. The MBCA protocol may be regarded as being composed of three parts: a first part including beacon timing advertisement, where the participating APs advertise their future TBTTs as well as the ones received from the neighboring APs; a second part including TBTT selection, where a new AP initially collects beacon timing advertisements from its neighbors and the ones from its neighbor's neighbors and selects its own TBTT such that it does not collide, avoids time overlap with the expected other AP's beacon transmissions; and a third part including TBTT adjustment, where an AP is empowered to indicate beacon time collisions to its neighbor APs by special action frames, which in turn may trigger a TBTT adjustment by the neighbor APs. The MBCA protocol is designed for mesh networks, with the purpose of preventing that mesh STAs, that are located out of range of each other, transmit their beacons at the same time with the same period, which may result in connectivity problems in the mesh network. In the context of the illustrated concepts, the MBCA protocol may also be utilized to achieve that APs 10 operating on the same channel coordinate the TBTTs in such a way that they are scattered over time and time overlap of beacon transmissions is thus avoided.

However, the existing MBCA protocol cannot be used to avoid overlap of beacon transmissions from APs 10 operating on different channels or APs 10 which are located too far away from each other so that they cannot directly communicate over the air. In the illustrated concepts such scenarios may be addressed by using one or more STAs 11 associated to the APs 10 to assist in disseminating information on the TBTTs among the APs 10. This may for example be achieved by extending the MBCA protocol by allowing also non-AP STAs 11 to send the beacon time advertisements and to request a TBTT adjustment from APs 10, even though the non-AP STAs 11 do not send beacons themselves.

In the illustrated concepts, a STA 11 that identifies beacon transmissions which overlap with the beacon transmissions from its associated AP 10, may signal corresponding control information to its associated AP 10. The control information may indicate the AP 10 sending the overlapping beacon transmissions and also the expected TBTT of the overlapping beacon transmissions. The overlapping beacons transmissions may also be on a different channel than the operating channel of the AP 10 to which the STA 11 is associated or may be from an AP 10 which is located out of wireless coverage from the AP 10 to which the STA 11 is associated. In response to receiving the signaled information, the AP 10 may adjust its TBTT to avoid the overlap. Further control information signaled among neighboring APs 10, e.g., using the MBCA protocol, may then cause further adjustments of the TBTTs applied by the APs 10. As a result, the TBTTs of the APs 10 may be scattered over time, even if at least some of the APs 10 operate on different channels or are located out of each other's wireless coverage range. For the STA 11, this expands the number of beacon transmissions which are usable for performing wireless sensing.

In the above signaling mechanism, the STA 11 may also decide which expected TBTTs are signaled in the control information. For example, the STA 11 could receive beacons from one or more APs 10 and decide to refrain from using these beacons for wireless sensing. In response to such decision, the STA 11 may refrain from including the expected TBTTs in the signaled control information, thereby avoiding excessive complexity of the coordination of TBTTs among the APs 10.

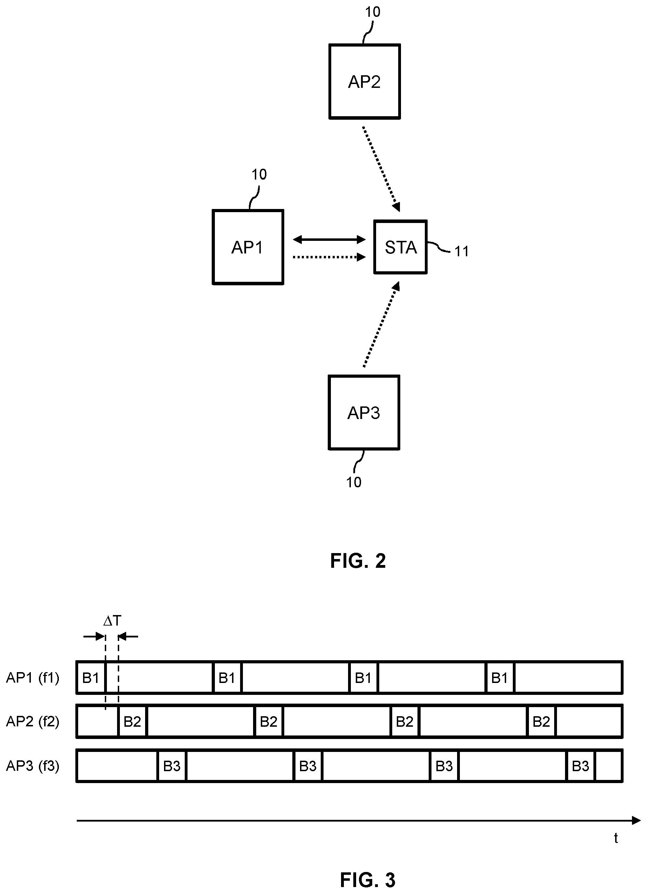

Fig. 2 illustrates an exemplary scenario in which the TBTTs of multiple APs 10 are coordinated in accordance with the above-described concepts, to enable enhanced wireless sensing by a STA 11. The scenario of Fig. 2 involves three APs 10, denoted as AP1, AP2, and AP3, and a STA 11. These APs 10 and STA 11 may for example correspond to any of the APs 10 and STAs 11 shown in Fig. 1. In the example of Fig. 2, it is assumed that STA 11 is associated to AP1 and that AP2 and AP3 operate on other channels than AP1. Beacon transmissions by the APs 10 are illustrated by dotted arrows. The STA 11 performs wireless sensing on the basis of the beacons received from the different APs 10, even though the beacons are transmitted on different channels. For this purpose, the STA 11 may switch its radio interface between different channels.

As mentioned above, AP1, AP2, and AP3 may coordinate their TBTTs in such a way that they are scattered over time, avoiding time overlap of the beacon transmissions, so that the STA 11 can efficiently utilize the beacons transmitted by AP1, AP2, and AP3. Fig. 3 schematically illustrates the result of such coordination. As illustrated, AP1 sends its beacons B1 on a first channel, corresponding to a first frequency denoted as f1, AP2 sends its beacons B2 on a second channel, corresponding to a second frequency denoted as f2, and AP3 sends its beacons B3 on a third channel, corresponding to a third frequency denoted as f3. The beacons B1, B2, B3 are each transmitted in a periodic manner, based on a common cycle, e.g., having a period of 102.4 ms. Within each cycle, the respective AP attempts transmitting its beacon at a corresponding TBTT. The TBTTs are offset with respect to each other to avoid time overlap of the beacon transmissions. Here, it is noted that the TBTT may differ from the actual time of transmitting the beacon because, before transmitting the beacon, the AP first needs to sense the channel and may need to delay transmission of the beacon until the channel becomes idle. In view of such issues, the timing of the offsets between the TBTTs may be set in such a way that after the expected end of a beacon transmission, the expected start of the next beacon transmission occurs after a time margin ΔT. Such time margin may allow for taking into account possible variations in the actual beacon transmission times due to the channel access procedure. Further, such margin may also allow for providing the STA 11 with sufficient time to switch its radio interface to another channel.

As mentioned above, the APs may each select their respective TBTT based on the TBTTs applied by the other APs. For example, AP1 may select its TBTT based on the TBTTs applied by AP2 and AP3. For this purpose control information may be provided to the APs. In some scenarios, such control information may be provided from a centralized control instance, such as the above-mentioned network controller 120. Alternatively or in addition, the STA 11 may provide such control information. When for example considering the example of Fig. 2, the STA 11 may detect the expected TBTTs of AP2 and AP3 and provide control information indicating the detected TBTTs to AP1. AP1 may then set or adjust its own TBTT to avoid time overlap of its own beacon transmissions with the beacon transmissions by AP2 and AP3.

Further, the STA 11 may provide control information to its associated AP, i.e., to AP1, indicating that STA 11 intends to use beacons from AP2 and AP3. Based on the TBTTs of AP2 and AP3, AP1 may then adapt scheduling of wireless transmissions between AP1 and the STA 11. In particular, AP1 may avoid scheduling the transmissions at times when the STA 11 will attempt to receive beacons from AP2 and AP3. In some scenarios, the STA 11 could also decide which control information should be signaled to AP1, depending on which beacons the STA 11 intends to use for performing the wireless sensing. For example, if the STA 11 decides to refrain from using the beacons from AP3 for performing the wireless sensing, the STA 11 could omit the detected TBTT of AP3 and related information from the control information signaled to AP1.

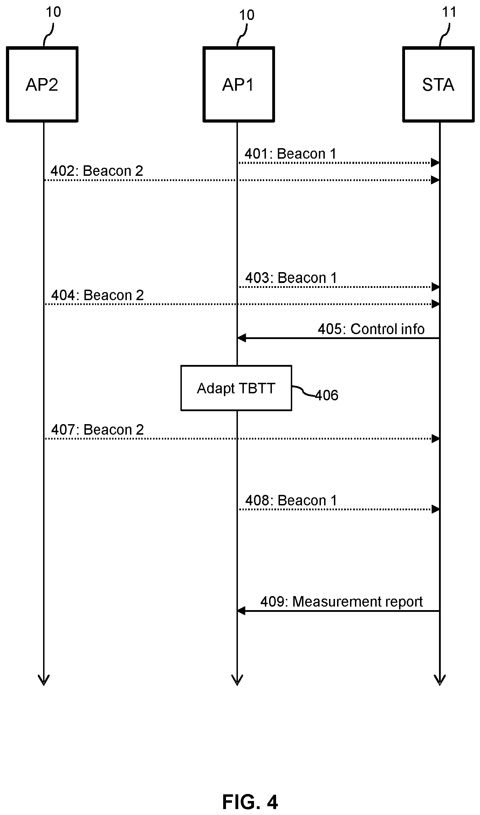

Fig. 4 illustrates an example of processes which are based on the illustrated concepts. Similar to the scenario of Fig. 2, the example of Fig. 4 involves a first AP 10, denoted as AP1 and a second AP 10, denoted as AP2, and a STA 11. These APs 10 and STA 11 may for example correspond to any of the APs 10 and STAs 11 shown in Fig. 1. In the example of Fig. 3, it is assumed that STA 11 is associated to AP1 and that AP2 operates on another channel than AP1.

In the example of Fig. 4, AP1 transmits a beacon 401, and AP2 transmits a beacon 402. The STA 11 receives these beacons 401, 402. In a next cycle of periodic beacon transmissions, AP1 transmits a beacon 403, and AP2 transmits a beacon 404, and the STA 11 also receives these beacons 403, 404. From the received beacons 401, 402, 403, 403, 404, the STA 11 may estimate the TBTT applied by AP1 and the TBTT applied by AP2. Further, the STA 11 may also detect whether there is time overlap of the beacon transmissions from AP1 and the beacon transmissions from AP2. Here, it is noted that in some cases, such time overlap may prevent the STA 11 from completely receiving one of the beacons 401, 402, 403, 404. In the case of significant time overlap, the STA 11 could also alternately receive beacons from AP1 and AP2, e.g., decide to omit receiving the beacon from AP1 in order to be able to receive the beacon from AP2.

As further illustrated, the STA 11 then provides control information 405 to AP1. The control information 405 indicates the TBTT as estimated to be applied by AP2 and also whether the STA 11 detected a time overlap with the beacons transmitted by AP1. Further, the control information 405 may also indicate whether the STA 11 intends to perform wireless sensing based on the beacons transmitted by AP2.

Based on the received control information 405, AP1 may then adapt its TBTT, so that time overlap of beacon transmissions from AP1 with beacon transmissions from AP2 is avoided. As a result, AP2 transmits a further beacon 407 at the next TBTT according to the existing cycle applied by AP2. AP1 in turn transmits a further beacon 408 at the TBTT adapted at block 406.

Based on the received beacons 407, 408 the STA 11 then performs wireless sensing, e.g., by measuring variations of radio channel characteristics. The STA 11 may then evaluate these variations to determine presence, location, and/or movement of objects in the environment of the STA 11. As further illustrated, the STA 11 may also provide a measurement report 409 indicating results of such measurements to AP1, e.g., to enable further evaluations performed by AP1. For example, the STA 11 could indicate measured variations of radio characteristics in the measurement report 409, and AP1 could evaluate these variations to determine presence, location, and/or movement of objects in the environment of the STA 11.

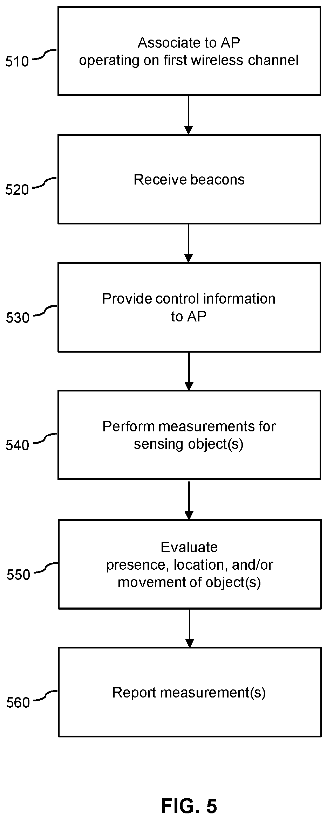

Fig. 5 shows a flowchart for illustrating a method, which may be utilized for implementing the illustrated concepts. The method of Fig. 5 may be used for implementing the illustrated concepts in a wireless station operating in a wireless communication system. The wireless station may be a STA, e.g., a non-AP STA, such as one of the above-mentioned STAs 11. The wireless communication system may be based on a WLAN technology, e.g., according to the IEEE 802.11 standards family.

If a processor-based implementation of the wireless station is used, at least some of the steps of the method of Fig. 5 may be performed and/or controlled by one or more processors of the wireless station. Such wireless station may also include a memory storing program code for implementing at least some of the below described functionalities or steps of the method of Fig. 5.

At step 510, the wireless station associates to an AP of the wireless communication system. The AP operates on a first wireless channel. The AP may for example correspond to any of the above-mentioned APs 10, e.g., to AP1 in the examples of Figs. 2, 3, and 4.

At step 520, the wireless station receives beacons. The beacons are received while the wireless station is associated to the AP. The beacons are periodically transmitted on one or more second wireless channels, e.g., according to a TBTT reoccurring according to a periodic cycle. The one or more second wireless channels are different from the first wireless channel, e.g., correspond to frequencies which are different from a frequency of the first wireless channel.

In some scenarios, step 520 may also involve that the wireless station receives one or more further beacons, which are periodically transmitted on the first wireless channel, e.g., by other APs.

The above-mentioned beacons 401, 402, 403, 404, 407, 408 are examples of the beacons received at step 520.

At step 530, the wireless station may provide control information to the AP. The control information may indicate a timing of at least one of the received one or more beacons. For example, the control information may indicate a TBTT of the at least one of the received beacons. Further, the wireless station may detect a time overlap of at least one of the received beacons with a beacon received from the AP. In such case, the control information may also indicate the detected time overlap. The above-mentioned control information 405 is an example of the control information provided at step 530.

In some scenarios, in response to sending the control information, the wireless station may receive the beacons from the AP with modified timing, e.g., as explained for the beacon 408 in the example of Fig. 4.

At step 540, the wireless station performing measurements for sensing one or more objects in an environment of the wireless station. These measurements are performed based on the beacons received at step 520. The measurements may for example involve measuring variations of radio characteristics. The objects could for example be human beings or animals. Based on the measurements, the wireless station evaluates presence, location, and/or movement of the one or more objects in the environment of the wireless station, as indicated by step 550. In addition, the wireless station may report the measurements to the AP, as indicated by step 560. This may for example involve that the wireless station sends one or more measurement reports, such as the measurement report 409 in the example of Fig. 4.

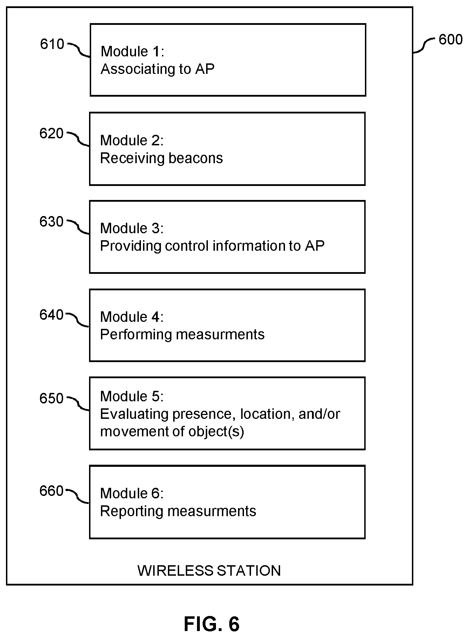

Fig. 6 shows a block diagram for illustrating functionalities of a wireless station 600 which operates according to the method of Fig. 5. The wireless station 600 may for example correspond to one of above-mentioned STAs 11. As illustrated, wireless station 600 may be provided with a module 610 configured to associate the wireless station to an AP, such as explained in connection with step 510. Further, the wireless station 600 may be provided with a module 620 configured to receive beacons, such as explained in connection with step 520. Further, the wireless station 600 may be provided with a module 630 configured to provide control information to the AP, such as explained in connection with step 530. Further, the wireless station 600 may be provided with a module 640 configured to perform measurements for wireless sensing, such as explained in connection with step 540. Further, the wireless station 600 may be provided with a module 650 configured to evaluate presence, location, and/or movement of one or more objects, such as explained in connection with step 550. Further, the wireless station 600 may be provided with a module 660 configured to report measurements, such as explained in connection with step 560.

It is noted that the wireless station 600 may include further modules for implementing other functionalities, such as known functionalities of a non-AP STA in the IEEE 802.11 technology. Further, it is noted that the modules of the wireless station 600 do not necessarily represent a hardware structure of the wireless station 600, but may also correspond to functional elements, e.g., implemented by hardware, software, or a combination thereof.

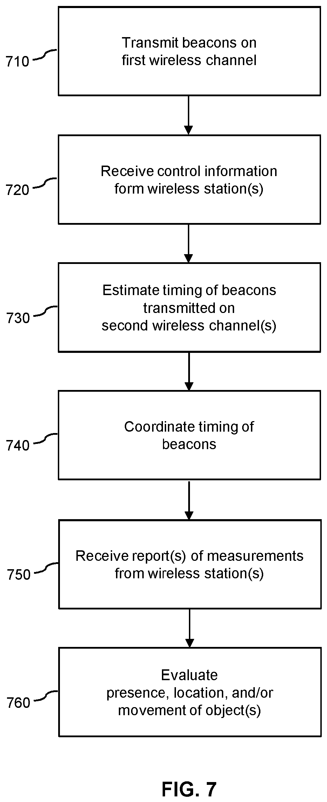

Fig. 7 shows a flowchart for illustrating a method, which may be utilized for implementing the illustrated concepts. The method of Fig. 7 may be used for implementing the illustrated concepts in an AP of a wireless communication system, such as one of the above-mentioned APs 10, e.g., AP1 in the examples of Figs. 2, 3, and 4. The wireless communication system may be based on a WLAN technology, e.g., according to the IEEE 802.11 standards family.

If a processor-based implementation of the AP is used, at least some of the steps of the method of Fig. 7 may be performed and/or controlled by one or more processors of the AP. Such AP may also include a memory storing program code for implementing at least some of the below described functionalities or steps of the method of Fig. 7.

At step 710, the AP transmits beacons on a first wireless channel. The beacons are periodically transmitted on one or more wireless channels, e.g., according to a TBTT reoccurring according to a periodic cycle. The above-mentioned beacons 401, 403, 408 are examples of the beacons transmitted at step 710.

At step 720, the AP may receive control information from a wireless station associated to the AP. The wireless station may for example correspond to any of the above-mentioned STAs 11. The received control information may indicate a timing of one or more received by the wireless station. For example, the control information may indicate a TBTT of the one or more beacons. Further, the control information may also indicate a detected time overlap of a beacon received by the wireless station with one of the beacons transmitted by the AP. The above-mentioned control information 405 is an example of the control information received at step 720.

At step 730, the AP estimates a timing of one or more beacons periodically transmitted on one or more second wireless channels. The one or more second wireless channels are different from the first wireless channel, e.g., correspond to frequencies which are different from a frequency of the first wireless channel. The beacons transmitted on the one or more second wireless channels may be transmitted by one or more other APs, such as AP2 and AP3 in the examples of Figs. 2, 3, and 4. In some cases, step 730 may involve that the AP estimates the timing based on the control information received at step 720. In such cases, the control information may for example indicate the timing of the beacons transmitted on the one or more second wireless channels, e.g., in terms of an estimated TBTT.

At step 740, the AP coordinates the timing of transmitting the beacons on the first wireless channel with the timing of transmitting the beacons on the one or more second wireless channels. The coordination of the timing of step 740 may reduce or avoid a time overlap of the beacons transmitted on the first wireless channel with the beacons transmitted on the one or more second wireless channels.

The coordination of the timing at step 740 is accomplished based on the timing estimated at step 730 and/or based on the control information received at step 720. The coordination may involve that the AP adapts the timing of sending the beacons on the first wireless channel, e.g., by adapting the TBTT as explained for the beacon 408 in the example of Fig. 4. In some scenarios, the AP may coordinate the timing by providing control information to one or more further APs operating on the one or more second wireless channels. In other case, the AP may receive control information from one or more further APs operating on the one or more second wireless channels and coordinate the timing based on the control information received from the one or more further APs. Such exchange of information may for example be performed through a network controller associated with the AP and the further APs, such as the above-mentioned network controller 120.

In some scenarios, the AP may use the control information received at step 720 as a basis for adapting scheduling of wireless transmissions between the at least one wireless station and the AP to avoid time overlap of the wireless transmissions and the beacons transmitted on the one or more second wireless channels.

At step 750, the AP receives one or more reports from at least one wireless station associated to the AP. The one or more reports indicate results of measurements for sensing one or more objects in an environment of the at least one wireless station. The measurements may be based on at least some of the beacons transmitted on the one or more second wireless channels. Further, the measurements may be based on at least some of the beacons transmitted on the first wireless channel. The measurements may for example correspond to measurements of variations of radio characteristics. The objects could for example be human beings or animals. Based on the reported results, the AP evaluates presence, location, and/or movement of the one or more objects in the environment of the at least one wireless station, as indicated by step 760.

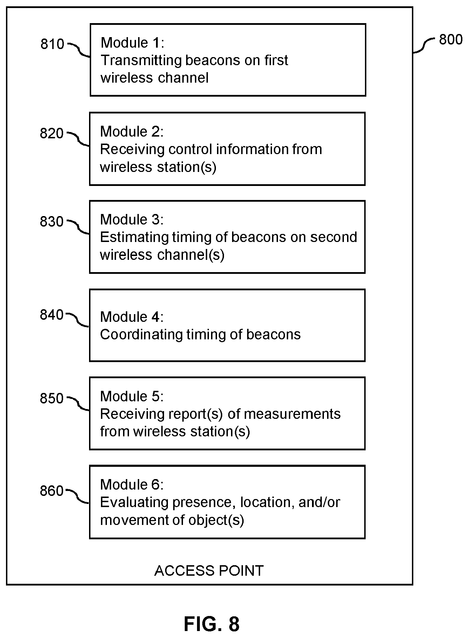

Fig. 8 shows a block diagram for illustrating functionalities of an AP 800 which operates according to the method of Fig. 7. The AP 800 may for example correspond to one of above-mentioned APs 10. As illustrated, AP 800 may be provided with a module 810 configured to transmit beacons, such as explained in connection with step 710. Further, the AP 800 may be provided with a module 820 configured to receive control information from a wireless station, such as explained in connection with step 720. Further, the AP 800 may be provided with a module 830 configured to estimate the timing of beacons, such as explained in connection with step 730. Further, the AP 800 may be provided with a module 840 configured to coordinate timing of beacon transmissions, such as explained in connection with step 740. Further, the AP 800 may be provided with a module 850 configured to receive one or more measurement report(s), such as explained in connection with step 750. Further, the AP 800 may be provided with a module 860 configured to evaluate presence, location, and/or movement of one or more objects, such as explained in connection with step 760.

It is noted that the AP 800 may include further modules for implementing other functionalities, such as known functionalities of an AP STA in the IEEE 802.11 technology. Further, it is noted that the modules of the AP 800 do not necessarily represent a hardware structure of the AP 800, but may also correspond to functional elements, e.g., implemented by hardware, software, or a combination thereof.

It is noted that the functionalities described in connection with Figs. 5 to 8 may also be combined in a system including an AP operating according to the method of Fig. 7 and at least one wireless station which is associated to the AP and operates according to the method of Fig. 5.

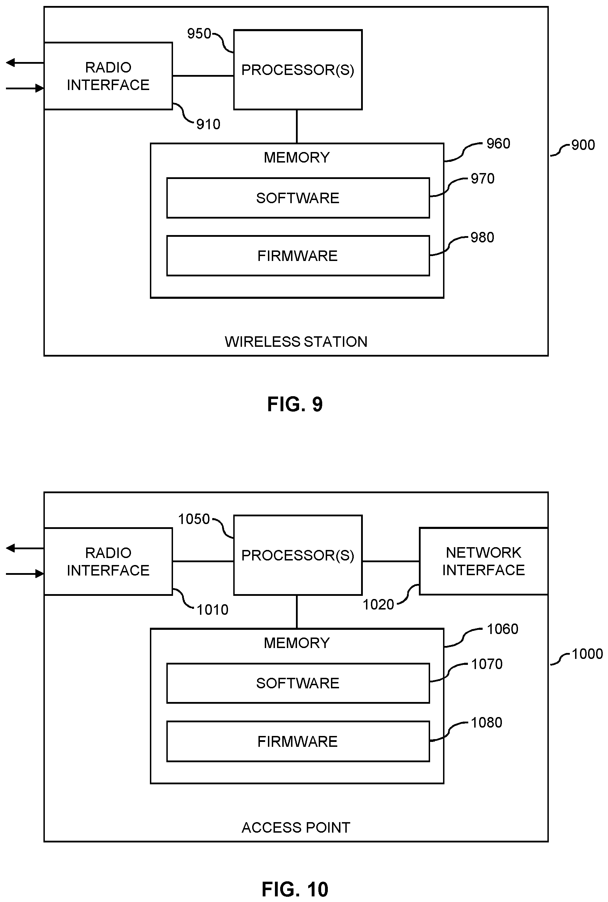

Fig. 9 illustrates a processor-based implementation of a wireless station 900 which may be used for implementing the above-described concepts. For example, the structures as illustrated in Fig. 9 may be used for implementing the concepts in any of the above-mentioned STAs 11.

As illustrated, the wireless station 900 includes one or more radio interfaces 910. The radio interface(s) 910 may for example be based on a WLAN technology, e.g., according to an IEEE 802.11 family standard. However, other wireless technologies could be supported as well, e.g., the LTE technology or the NR technology.

Further, the wireless station 900 may include one or more processors 950 coupled to the radio interface(s) 910 and a memory 960 coupled to the processor(s) 950. By way of example, the radio interface(s) 910, the processor(s) 950, and the memory 960 could be coupled by one or more internal bus systems of the wireless station 900. The memory 960 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless sensing, such as explained in connection with Fig. 5.

It is to be understood that the structures as illustrated in Fig. 9 are merely schematic and that the wireless station 900 may actually include further components which, for the sake of clarity, have not been illustrated, e.g., further interfaces or further processors. Also, it is to be understood that the memory 960 may include further program code for implementing known functionalities of a WLAN STA. According to some embodiments, also a computer program may be provided for implementing functionalities of the wireless station 900, e.g., in the form of a physical medium storing the program code and/or other data to be stored in the memory 960 or by making the program code available for download or by streaming.

Fig. 10 illustrates a processor-based implementation of an AP 1000 which may be used for implementing the above-described concepts. For example, the structures as illustrated in Fig. 10 may be used for implementing the concepts in any of the above-mentioned APs 10, e.g., in AP1 in the examples of Figs. 2, 3, and 4.

As illustrated, the AP 1000 includes one or more radio interfaces 1010. The radio interface(s) 1010 may for example be based on a WLAN technology, e.g., according to an IEEE 802.11 family standard. However, other wireless technologies could be supported as well, e.g., the LTE technology or the NR technology. As further illustrated, the AP 1000 may also include one or more network interfaces 1020 which may be used for communication with other nodes of a wireless communication network, e.g., with other APs, with a network controller, and/or with an application service platform, e.g., as illustrated in Fig. 1.

Further, the AP 1000 may include one or more processors 1050 coupled to the interface(s) 1010, 1020 and a memory 1060 coupled to the processor(s) 1050. By way of example, the interface(s) 1010, 1020, the processor(s) 1050, and the memory 1060 could be coupled by one or more internal bus systems of the AP 1000. The memory 1060 may include a ROM, e.g., a flash ROM, a RAM, e.g., a DRAM or SRAM, a mass storage, e.g., a hard disk or solid state disk, or the like. As illustrated, the memory 1060 may include software 1070 and/or firmware 1080. The memory 1060 may include suitably configured program code to be executed by the processor(s) 1050 so as to implement the above-described functionalities for coordinating beacon transmissions, such as explained in connection with Fig. 7.

It is to be understood that the structures as illustrated in Fig. 10 are merely schematic and that the AP 1000 may actually include further components which, for the sake of clarity, have not been illustrated, e.g., further interfaces or further processors. Also, it is to be understood that the memory 1060 may include further program code for implementing known functionalities of a WLAN AP. According to some embodiments, also a computer program may be provided for implementing functionalities of the AP 1000, e.g., in the form of a physical medium storing the program code and/or other data to be stored in the memory 1060 or by making the program code available for download or by streaming.

As can be seen, the concepts as described above may be used for efficiently enhancing wireless sensing performance of a STA operated in an environment where APs transmit beacons on different wireless channels. In particular, concepts enable the STA to make use of more beacons for performing wireless sensing. This allows for achieving an improved sensing performance because the sensing can be based on a higher number of received beacons, including beacons from different sources, so that sensing precision can be improved and/or a larger total environment be sensed.

It is to be understood that the examples and embodiments as explained above are merely illustrative and susceptible to various modifications. For example, the illustrated concepts may be applied in connection with various kinds of wireless technologies, without limitation to WLAN technologies. Further, the concepts may be applied with respect to various types of APs and wireless stations. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling operations in a wireless communication system, the method comprising:
a wireless station (11; 600; 900) associating to an access point (10; 800; 1000) of the wireless communication system, the access point (10; 800; 1000) operating on a first wireless channel; and
while the wireless station (11; 600; 900) is associated to the access point (10; 800; 1000), the wireless station (11; 600; 900) receiving beacons (402, 404, 407) periodically transmitted by one or more other access points (10; 800; 1000) on one or more second wireless channels different from the first wireless channel;
the wireless station (11; 600; 900) providing control information (405) to the access point (10; 800; 1000), the control information (405) indicating a timing of at least one of the received beacons (402, 404, 407);
based on the received beacons (402, 404, 407), the wireless station (11; 600; 900) performing measurements for sensing one or more human beings or animals in an environment of the wireless station (11; 600; 900); and
based on the measurements, the wireless station (11; 600; 900) evaluating presence, location, and/or movement of the one or more human beings or animals in the environment of the wireless station (11; 600; 900).

2. The method according to claim 1,
wherein the wireless station (11; 600; 900) detects a time overlap of at least one of the received beacons (402, 404, 407) with a beacon (401, 403, 408) transmitted by the access point (10; 800; 1000) and the control information (405) indicates the detected time overlap, and/or wherein the control information indicates a target beacon transmission time of the at least one of the received beacons (402, 404, 407).

3. The method according to claim 1 or 2, comprising:
in response to sending the control information, the wireless station (11; 600; 900) receiving beacons (401, 403, 408) from the access point (10; 800; 1000) with modified timing; and/or
the wireless station (11; 600; 900) receiving periodically transmitted further beacons (401, 403, 408) on the first wireless channel, wherein the measurements for sensing of the one or more human beings or animals in the environment of the wireless station (11; 600; 900) are further based on the further beacons (401, 403, 408).

4. The method according to any one of the preceding claims, comprising: the wireless station (11; 600; 900) reporting the measurements to the access point (10; 800;
1000).

5. The method according to any one of the preceding claims,
wherein the wireless communication system is based on a Wireless Local Area Network technology according to the IEEE 802.11 standards family.

6. A method of controlling operations in a wireless communication system, the method comprising:
an access point (10; 800; 1000) of the wireless communication system periodically transmitting beacons (401, 403, 408) on a first wireless channel;
the access point (10; 800; 1000) receiving control information (405) from at least one wireless station (11; 600; 900) associated to the access point (10; 800; 1000), the control information (405) indicating a timing of one or more beacons (402, 404, 407) periodically transmitted on one or more second wireless channels different from the first wireless channel;
based on the indicated timing, the access point (10; 800; 1000) coordinating the timing of transmitting the beacons (401, 403, 408) on the first wireless channel with the timing of transmitting the beacons (402, 404, 407) on the one or more second wireless channels, wherein said coordinating of the timing reduces a time overlap of the beacons (401, 403, 408) transmitted on the first wireless channel with the beacons (402, 404, 407) transmitted on the one or more second wireless channels;
the access point (10; 800; 1000) receiving one or more reports (409) from at least one wireless station (11; 600; 900) associated to the access point (10; 800; 1000), the one or more reports indicating results of measurements for sensing one or more human beings or animals in an environment of the at least one wireless station (11; 600; 900), the measurements being based on at least some of the beacons transmitted on the one or more second wireless channels; and
based on the reported results, the access point (10; 800; 1000) evaluating presence, location, and/or movement of the one or more human beings or animals in the environment of the wireless station.

7. The method according to claim 6,
wherein the control information (405) received from the at least one wireless station (11; 600; 900) indicates a detected time overlap of the beacons (401, 403, 408) transmitted by the access point (10; 800; 1000) with at least one beacons (402, 404, 407) received by the wireless station (11; 600; 900), and/or
wherein the control information (405) received from the at least one wireless station (11; 600; 900) indicates a target beacon transmission time of at least one beacon received by the wireless station (11; 600; 900).

8. The method according to claim 6 or 7, comprising:
based on the control information (405) received from the at least one wireless station (11; 600; 900), the access point (10; 800; 1000) adapting scheduling of wireless transmissions between the at least one wireless station (11; 600; 900) and the access point(10; 800; 1000) to avoid time overlap of the wireless transmissions and the beacons (402, 404, 407) transmitted on the one or more second wireless channels.

9. The method according to any one of claims 6 to 8, comprising:
the access point (10; 800; 1000) coordinating the timing by providing control information to one or more further access points (10) operating on the one or more second wireless channels; and/or
the access point (10; 800; 1000) receiving control information from one or more further access points (10) operating on the one or more second wireless channels, said coordinating of the timing being based on the control information received from the one or more further access points (10).

10. The method according to any one of claims 6 to 9,
wherein the wireless communication system is based on a Wireless Local Area Network technology according to the IEEE 802.11 standards family.

11. A wireless station (11; 600; 900) for operation in a wireless communication system, the wireless station (11; 600; 900) being configured to:
associate to an access point (10; 800; 1000) of the wireless communication system, the access point (10; 800; 1000) operating on a first wireless channel; and
while the wireless station (11; 600; 900) is associated to the access point (10; 800; 1000), receive beacons periodically transmitted by one or more other access points (10; 800; 1000) on one or more second wireless channels different from the first wireless channel;
provide control information (405) to the access point (10; 800; 1000), the control information (405) indicating a timing of at least one of the received beacons (402, 404, 407);
based on the received beacons, perform measurements for sensing one or more human beings or animals in an environment of the wireless station (11; 600; 900);
based on the measurements, evaluate presence, location, and/or movement of the one or more human beings or animals in the environment of the wireless station (11; 600; 900).

12. The wireless station (11; 600; 900) according to claim 11,
wherein the wireless station (11; 600; 900) is configured to perform a method according to any one of claims 2 to 5.

13. An access point (10; 800; 1000) for a wireless communication system, the access point (10; 800; 1000) being configured to:
periodically transmit beacons on a first wireless channel;
receive control information (405) from at least one wireless station (11; 600; 900) associated to the access point (10; 800; 1000), the control information (405) indicating a timing of one or more beacons periodically transmitted on one or more second wireless channels different from the first wireless channel;
based on the indicated timing, coordinate the timing of transmitting the beacons on the first wireless channel with the timing of transmitting the beacons on the one or more second wireless channels, wherein said coordinating of the timing reduces a time overlap of the beacons (401, 403, 408) transmitted on the first wireless channel with the beacons (402, 404, 407) transmitted on the one or more second wireless channels;
receive one or more reports (409) from at least one wireless station (11; 600; 900) associated to the access point (10; 800; 1000), the one or more reports indicating results of measurements for sensing one or more human beings or animals in an environment of the at least one wireless station (11; 600; 900), the measurements being based on at least some of the beacons transmitted on the one or more second wireless channels; and
based on the reported results, evaluate presence, location, and/or movement of the one or more human beings or animals in the environment of the wireless station.

14. The access point (10; 800; 1000) according to claim 13,
wherein the access point (10; 800; 1000) is configured to perform a method according to any one of claims 7 to 10.

## Patentansprüche

1. Verfahren zur Steuerung von Operationen in einem Drahtloskommunikationssystem, wobei das Verfahren umfasst, dass:
eine Drahtlosstation (11; 600; 900) eine Verbindung zu einem Zugangspunkt (10; 800; 1000) des Drahtloskommunikationssystems herstellt, wobei der Zugangspunkt (10; 800; 1000) auf einem ersten Drahtloskanal operiert; und
die Drahtlosstation (11; 600; 900), während die Drahtlosstation (11; 600; 900) mit dem Zugangspunkt (10; 800; 1000) verbunden ist, Bakensignale (402, 404, 407) empfängt, die von einem oder mehreren anderen Zugangspunkten (10; 800; 1000) periodisch auf einem oder mehreren zweiten Drahtloskanälen gesendet werden, die sich von dem ersten Drahtloskanal unterscheiden;
die Drahtlosstation (11; 600; 900) Steuerinformationen (405) für den Zugangspunkt (10; 800; 1000) bereitstellt, wobei die Steuerinformationen (405) eine Zeitvorgabe mindestens eines der empfangenen Bakensignale (402, 404, 407) angeben;
die Drahtlosstation (11; 600; 900) basierend auf den Bakensignalen (402, 404, 407) Messungen zum Erfassen eines oder mehrerer Menschen oder Tiere in einer Umgebung der Drahtlosstation (11; 600; 900) durchführt; und
die Drahtlosstation (11; 600; 900) basierend auf den Messungen Anwesenheit, Aufenthaltsort und/oder Bewegung des einen oder der mehreren Menschen oder Tiere in der Umgebung der Drahtlosstation (11; 600; 900) beurteilt.

2. Verfahren nach Anspruch 1,
wobei die Drahtlosstation (11; 600; 900) eine zeitliche Überlappung mindestens eines der empfangenen Bakensignals (402, 404, 407) mit einem Bakensignal (401, 403, 408) erkennt, das von dem Zugangspunkt (10; 800; 1000) gesendet wird, und die Steuerinformationen (405) die erkannte zeitliche Überlappung angeben, und/oder
wobei die Steuerinformationen eine Zielbakensignalübertragungszeit des mindestens einen der empfangenen Bakensignale (402, 404, 407) angeben.

3. Verfahren nach Anspruch 1 oder 2, umfassend, dass:
die Drahtlosstation (11; 600; 900) in Reaktion auf das Senden der Steuerinformationen Bakensignale (401, 403, 408) von dem Zugangspunkt (10; 800; 1000) mit modifizierter Zeitvorgabe empfängt; und/oder
die Drahtlosstation (11; 600; 900) periodisch gesendete weitere Bakensignale (401, 403, 408) auf dem ersten Drahtloskanal empfängt, wobei die Messungen zum Erfassen des einen oder der mehreren Menschen oder Tiere in der Umgebung der Drahtlosstation (11; 600; 900) ferner auf den weiteren Bakensignalen (401, 403, 408) basieren.

4. Verfahren nach einem der vorhergehenden Ansprüche, umfassend, dass:
die Drahtlosstation (11; 600; 900) die Messungen an den Zugangspunkt (10; 800; 1000) meldet.

5. Verfahren nach einem der vorhergehenden Ansprüche, wobei das Drahtloskommunikationssystem auf einer Wireless Local Area Network-Technologie gemäß der IEEE 802.11-Standardfamilie basiert.

6. Verfahren zur Steuerung von Operationen in einem Drahtloskommunikationssystem, wobei das Verfahren umfasst, dass:
ein Zugangspunkt (10; 800; 1000) des Drahtloskommunikationssystems periodisch Bakensignale (401, 403, 408) auf einem ersten Drahtloskanal sendet;
der Zugangspunkt (10; 800; 1000) Steuerinformationen (405) von mindestens einer Drahtlosstation (11; 600; 900) empfängt, die mit dem Zugangspunkt (10; 800; 1000) verbunden ist, wobei die Steuerinformationen (405) eine Zeitvorgabe eines oder mehrerer Bakensignale (402, 404, 407) angeben, die periodisch auf einem oder mehreren zweiten Drahtloskanälen gesendet werden, die sich von dem ersten Drahtloskanal unterscheiden;
der Zugangspunkt (10; 800; 1000) basierend auf der angegebenen Zeitvorgabe die Zeitvorgabe zum Senden der Bakensignale (401, 403, 408) auf dem ersten Drahtloskanal mit der Zeitvorgabe zum Senden der Bakensignale (402, 404, 407) auf dem einen oder den mehreren zweiten Drahtloskanälen koordiniert, wobei das Koordinieren der Zeitvorgabe eine zeitliche Überlappung der Bakensignale (401, 403, 408), die auf dem ersten Drahtloskanal gesendet werden, mit den Bakensignalen (402, 404, 407), die auf dem einen oder den mehreren zweiten Bakensignalen gesendet werden, reduziert;
der Zugangspunkt (10; 800; 1000) eine oder mehrere Meldungen (409) von mindestens einer Drahtlosstation (11; 600; 900) empfängt, die mit dem Zugangspunkt (10; 800; 1000) verbunden ist, wobei die eine oder die mehreren Meldungen Ergebnisse von Messungen zum Erfassen eines oder mehrerer Menschen oder Tiere in der Umgebung der mindestens einen Drahtlosstation (11; 600; 900) angeben, wobei die Messungen zumindest auf einigen der Bakensignale basieren, die auf dem einen oder den mehreren zweiten Drahtloskanälen gesendet werden; und
der Zugangspunkt (10; 800; 1000) basierend auf den Messergebnissen Anwesenheit, Aufenthaltsort und/oder Bewegung des einen oder der mehreren Menschen oder Tiere in der Umgebung der Drahtlosstation beurteilt.

7. Verfahren nach Anspruch 6,
wobei die Steuerinformationen (405), die von der mindestens einen Drahtlosstation (11; 600; 900) empfangen werden, eine erkannte zeitliche Überlappung der Bakensignale (401, 403, 408), die von dem Zugangspunkt (10; 800; 1000) gesendet werden, mit mindestens einem Bakensignal (402, 404, 407) angeben, das durch die Drahtlosstation (11; 600; 900) empfangen wird; und/oder
wobei die Steuerinformationen (405), die von der mindestens einen Drahtlosstation (11; 600; 900) empfangen werden, eine Zielbakensignalübertragungszeit mindestens eines Bakensignals angeben, das durch die Drahtlosstation (11; 600; 900) empfangen wird.

8. Verfahren nach Anspruch 6 oder 7, umfassend, dass:
der Zugangspunkt (10; 800; 1000) basierend auf den Steuerinformationen (405), die von der mindestens einen Drahtlosstation (11; 600; 900) empfangen werden, die Disposition von Drahtlosübertragungen zwischen der mindestens einen Drahtlosstation (11; 600; 900) und dem Zugangspunkt (10; 800; 1000) anpasst, um zeitliche Überlappung der Drahtlosübertragungen und der auf dem einen oder den mehreren zweiten Drahtloskanälen gesendeten Bakensignale (402, 404, 407) zu vermeiden.

9. Verfahren nach einem der Ansprüche 6 bis 8, umfassend, dass:
der Zugangspunkt (10; 800; 1000) die Zeitvorgabe durch Bereitstellen von Steuerinformationen für einen oder mehrere weitere Zugangspunkte (10) koordiniert, die auf dem einen oder den mehreren zweiten Drahtloskanälen operieren; und/oder
der Zugangspunkt (10; 800; 1000) Steuerinformationen von einem oder mehreren weiteren Zugangspunkten (10) empfängt, die auf dem einen oder den mehreren zweiten Drahtloskanälen operieren, wobei das Koordinieren der Zeitvorgabe auf den Steuerinformationen basiert, die von dem einen oder den mehreren weiteren Zugangspunkten (10) empfangen werden.

10. Verfahren nach einem der Ansprüche 6 bis 9,
wobei das Drahtloskommunikationssystem auf einer Wireless Local Area Network-Technologie gemäß der IEEE 802.11-Standardfamilie basiert.

11. Drahtlosstation (11; 600; 900) für Betrieb in einem Drahtloskommunikationssystem, wobei die Drahtlosstation (11; 600; 900) zu Folgendem konfiguriert ist:
Herstellen einer Verbindung zu einem Zugangspunkt (10; 800; 1000) des Drahtloskommunikationssystems, wobei der Zugangspunkt (10; 800; 1000) auf einem ersten Drahtloskanal operiert; und
während die Drahtlosstation (11; 600; 900) mit dem Zugangspunkt (10; 800; 1000) verbunden ist, Empfangen von Bakensignalen, die von einem oder mehreren anderen Zugangspunkten (10; 800; 1000) periodisch auf einem oder mehreren zweiten Drahtloskanälen gesendet werden, die sich von dem ersten Drahtloskanal unterscheiden;
Bereitstellen von Steuerinformationen (405) für den Zugangspunkt (10; 800; 1000), wobei die Steuerinformationen (405) eine Zeitvorgabe mindestens eines der empfangenen Bakensignale (402, 404, 407) angeben;
Durchführen von Messungen zum Erfassen eines oder mehrerer Menschen oder Tiere in einer Umgebung der Drahtlosstation (11; 600; 900) basierend auf den Bakensignalen;
Beurteilen von Anwesenheit, Aufenthaltsort und/oder Bewegung des einen oder der mehreren Menschen oder Tiere in der Umgebung der Drahtlosstation (11; 600; 900) basierend auf den Messungen.

12. Drahtlosstation (11; 600; 900) nach Anspruch 11,
wobei die Drahtlosstation (11; 600; 900) zum Durchführen eines Verfahrens nach einem der Ansprüche 2 bis 5 konfiguriert ist.

13. Zugangspunkt (10; 800; 1000) für ein Drahtloskommunikationssystem, wobei der Zugangspunkt (10; 800; 1000) zu Folgendem konfiguriert ist:
periodischen Senden von Bakensignalen auf einem ersten Drahtloskanal;
Empfangen von Steuerinformationen (405) von mindestens einer Drahtlosstation (11; 600; 900), die mit dem Zugangspunkt (10; 800; 1000) verbunden ist, wobei die Steuerinformationen (405) eine Zeitvorgabe eines oder mehrerer Bakensignale angeben, die periodisch auf einem oder mehreren zweiten Drahtloskanälen gesendet werden, die sich von dem ersten Drahtloskanal unterscheiden;
basierend auf der angegebenen Zeitvorgabe Koordinieren der Zeitvorgabe zum Senden der Bakensignale auf dem ersten Drahtloskanal mit der Zeitvorgabe zum Senden der Bakensignale auf dem einen oder den mehreren zweiten Drahtloskanälen, wobei das Koordinieren der Zeitvorgabe eine zeitliche Überlappung der Bakensignale (401, 403, 408), die auf dem ersten Drahtloskanal gesendet werden, mit den Bakensignalen (402, 404, 407), die auf dem einen oder den mehreren zweiten Bakensignalen gesendet werden, reduziert;
Empfangen einer oder mehrerer Meldungen (409) von mindestens einer Drahtlosstation (11; 600; 900), die mit dem Zugangspunkt (10; 800; 1000) verbunden ist, wobei die eine oder die mehreren Meldungen Ergebnisse von Messungen zum Erfassen eines oder mehrerer Menschen oder Tiere in der Umgebung der mindestens einen Drahtlosstation (11; 600; 900) angeben, wobei die Messungen zumindest auf einigen der Bakensignale basieren, die auf dem einen oder den mehreren zweiten Drahtloskanälen gesendet werden; und
basierend auf den gemeldeten Ergebnissen Beurteilen von Anwesenheit, Aufenthaltsort und/oder Bewegung des einen oder der mehreren Menschen oder Tiere in der Umgebung der Drahtlosstation.

14. Zugangspunkt (10; 800; 1000) nach Anspruch 13, wobei der Zugangspunkt (10; 800; 1000) zum Durchführen eines Verfahrens nach einem der Ansprüche 7 bis 10 konfiguriert ist.

## Revendications

1. Procédé de commande d'opérations dans un système de communication sans fil, le procédé comprenant :
par une station sans fil (11 ; 600 ; 900), l'association à un point d'accès (10 ; 800 ; 1000) du système de communication sans fil, le point d'accès (10 ; 800 ; 1000) fonctionnant sur un premier canal sans fil ; et pendant que la station sans fil (11 ; 600 ; 900) est associée au point d'accès (10 ; 800 ; 1000), la réception, par la station sans fil (11 ; 600 ; 900), de balises (402, 404, 407) transmises périodiquement par un ou plusieurs autres points d'accès (10 ; 800 ; 1000) sur un ou plusieurs deuxièmes canaux sans fil différents du premier canal sans fil :
par la station sans fil (11 ; 600 ; 900), la fourniture d'informations de commande (405) au point d'accès (10 ; 800 ; 1000), les informations de commande (405) indiquant une temporisation d'au moins l'une des balises (402, 404, 407) reçues ;
sur la base des balises (402, 404, 407) reçues, la réalisation, par la station sans fil (11 ; 600 ; 900), de mesures pour détecter un ou plusieurs êtres humains ou animaux dans un environnement de la station sans fil (11 ; 600 ; 900) ; et
sur la base des mesures, l'évaluation, par la station sans fil (11 ; 600 ; 900), d'une présence, d'un emplacement et/ou d'un déplacement des un ou plusieurs êtres humains ou animaux dans l'environnement de la station sans fil (11 ; 600 ; 900).

2. Procédé selon la revendication 1,
dans lequel la station sans fil (11 ; 600 ; 900) détecte un chevauchement temporel d'au moins l'une des balises (402, 404, 407) reçues avec une balise (401, 403, 408) transmise par le point d'accès (10 ; 800 ; 1000) et les informations de commande (405) indiquent le chevauchement temporel détecté, et/ou
dans lequel les informations de commande indiquent un temps de transmission de balise cible de l'au moins une des balises (402, 404, 407) reçues.

3. Procédé selon la revendication 1 ou 2, comprenant :
en réponse à l'envoi des informations de commande, la réception, par la station sans fil (11 ; 600 ; 900), de balises (401, 403, 408) depuis le point d'accès (10 ; 800 ; 1000) avec une temporisation modifiée ; et/ou
la réception, par la station sans fil (11 ; 600 ; 900), de balises (401, 403, 408) supplémentaires transmises périodiquement sur le premier canal sans fil, dans lequel les mesures pour la détection des un ou plusieurs êtres humains ou animaux dans l'environnement de la station sans fil (11 ; 600 ; 900) sont en outre basées sur les balises (401, 403, 408) supplémentaires.

4. Procédé selon l'une quelconque des revendications précédentes, comprenant :
par la station sans fil (11 ; 600 ; 900), le rapport des mesures au point d'accès (10 ; 800 ; 1000).

5. Procédé selon l'une quelconque des revendications précédentes,
dans lequel le système de communication sans fil est basé sur une technologie de réseau local sans fil conformément à la famille de normes IEEE 802.11.

6. Procédé de commande d'opérations dans un système de communication sans fil, le procédé comprenant :
par un point d'accès (10 ; 800 ; 1000) du système de communication sans fil, la transmission périodique de balises (401, 403, 408) sur un premier canal sans fil ; par le point d'accès (10 ; 800 ; 1000), la réception d'informations de commande (405) depuis au moins une station sans fil (11 ; 600 ; 900) associée au point d'accès (10 ; 800 ; 1000), les informations de commande (405) indiquant une temporisation d'une ou plusieurs balises (402, 404, 407) transmises périodiquement sur un ou plusieurs deuxièmes canaux sans fil différents du premier canal sans fil ;
sur la base de la temporisation indiquée, la coordination, par le point d'accès (10 ; 800 ; 1000), de la temporisation de transmission des balises (401, 403, 408) sur le premier canal sans fil avec la temporisation de transmission des balises (402, 404, 407) sur les un ou plusieurs deuxièmes canaux sans fil, dans lequel ladite coordination de la temporisation réduit un chevauchement temporel des balises (401, 403, 408) transmises sur le premier canal sans fil avec les balises (402, 404, 407) transmises sur les un ou plusieurs deuxièmes canaux sans fil ;
par le point d'accès (10 ; 800 ; 1000), la réception d'un ou plusieurs rapports (409) depuis au moins une station sans fil (11 ; 600 ; 900) associée au point d'accès (10 ; 800 ; 1000), les un ou plusieurs rapports indiquant des résultats de mesures pour détecter un ou plusieurs êtres humains ou animaux dans un environnement de l'au moins une station sans fil (11 ; 600 ; 900), les mesures étant basées sur au moins certaines des balises transmises sur les un ou plusieurs deuxièmes canaux sans fil ; et
sur la base des résultats rapportés, l'évaluation, par le point d'accès (10 ; 800 ; 1000), d'une présence, d'un emplacement et/ou d'un déplacement des un ou plusieurs êtres humains ou animaux dans l'environnement de la station sans fil.

7. Procédé selon la revendication 6,
dans lequel les informations de commande (405) reçues depuis l'au moins une station sans fil (11 ; 600 ; 900) indiquent un chevauchement temporel des balises (401, 403, 408) transmises par le point d'accès (10 ; 800 ; 1000) avec au moins l'une des balises (402, 404, 407) reçues par la station sans fil (11 ; 600 ; 900), et/ou dans lequel les informations de commande (405) reçues depuis l'au moins une station sans fil (11 ; 600 ; 900) indiquent un temps de transmission de balise cible d'au moins une balise reçue par la station sans fil (11 ; 600 ; 900).

8. Procédé selon la revendication 6 ou 7, comprenant :
sur la base des informations de commande (405) reçues depuis l'au moins une station sans fil (11 ; 600 ; 900), l'adaptation, par le point d'accès (10 ; 800 ; 1000), d'une planification de transmissions sans fil entre l'au moins une station sans fil (11 ; 600 ; 900) et le point d'accès (10 ; 800 ; 1000) pour éviter un chevauchement temporel des transmissions sans fil et des balises (402, 404, 407) transmises sur les un ou plusieurs deuxièmes canaux sans fil.

9. Procédé selon l'une quelconque des revendications 6 à 8, comprenant :
par le point d'accès (10 ; 800 ; 1000), la coordination de la temporisation par la fourniture d'informations de commande à un ou plusieurs points d'accès (10) supplémentaires fonctionnant sur les un ou plusieurs deuxièmes canaux sans fil ; et/ou
par le point d'accès (10 ; 800 ; 1000), la réception d'informations de commande depuis un ou plusieurs points d'accès (10) supplémentaires fonctionnant sur les un ou plusieurs deuxièmes canaux sans fil, ladite coordination de la temporisation étant basée sur les informations de commande reçues depuis les un ou plusieurs points d'accès (10) supplémentaires.

10. Procédé selon l'une quelconque des revendications 6 à 9,
dans lequel le système de communication sans fil est basé sur une technologie de réseau local sans fil conformément à la famille de normes IEEE 802.11.

11. Station sans fil (11 ; 600 ; 900) destinée à fonctionner dans un système de communication sans fil, la station sans fil (11 ; 600 ; 900) étant configurée pour :
s'associer à un point d'accès (10 ; 800 ; 1000) du système de communication sans fil, le point d'accès (10 ; 800 ; 1000) fonctionnant sur un premier canal sans fil ; et
pendant que la station sans fil (11 ; 600 ; 900) est associée au point d'accès (10 ; 800 ; 1000), recevoir des balises transmises périodiquement par un ou plusieurs autres points d'accès (10 ; 800 ; 1000) sur un ou plusieurs deuxièmes canaux sans fil différents du premier canal sans fil :
fournir des informations de commande (405) au point d'accès (10 ; 800 ; 1000), les informations de commande (405) indiquant une temporisation d'au moins l'une des balises (402, 404, 407) reçues ;
sur la base des balises reçues, réaliser des mesures pour détecter un ou plusieurs êtres humains ou animaux dans un environnement de la station sans fil (11 ; 600 ; 900) ; et
sur la base des mesures, évaluer une présence, un emplacement et/ou un déplacement des un ou plusieurs êtres humains ou animaux dans l'environnement de la station sans fil (11 ; 600 ; 900).

12. Station sans fil (11 ; 600 ; 900) selon la revendication 11,
dans laquelle la station sans fil (11 ; 600 ; 900) est configurée pour réaliser un procédé selon l'une quelconque des revendications 2 à 5.

13. Point d'accès (10 ; 800 ; 1000) pour un système de communication sans fil, le point d'accès (10 ; 800 ; 1000) étant configuré pour :
transmettre périodiquement des balises sur un premier canal sans fil ;
recevoir des informations de commande (405) depuis au moins une station sans fil (11 ; 600 ; 900) associée au point d'accès (10 ; 800 ; 1000), les informations de commande (405) indiquant une temporisation d'une ou plusieurs balises transmises périodiquement sur un ou plusieurs deuxièmes canaux sans fil différents du premier canal sans fil ;
sur la base de la temporisation indiquée, coordonner la temporisation de transmission des balises sur le premier canal sans fil avec la temporisation de transmission des balises sur les un ou plusieurs deuxièmes canaux sans fil, dans lequel ladite coordination de la temporisation réduit un chevauchement temporel des balises (401, 403, 408) transmises sur le premier canal sans fil avec les balises (402, 404, 407) transmises sur les un ou plusieurs deuxièmes canaux sans fil ;
recevoir un ou plusieurs rapports (409) depuis au moins une station sans fil (11 ; 600 ; 900) associée au point d'accès (10 ; 800 ; 1000), les un ou plusieurs rapports indiquant des résultats de mesures pour détecter un ou plusieurs êtres humains ou animaux dans un environnement de l'au moins une station sans fil (11 ; 600 ; 900), les mesures étant basées sur au moins certaines des balises transmises sur les un ou plusieurs deuxièmes canaux sans fil ; et
sur la base des résultats rapportés, évaluer une présence, un emplacement et/ou un déplacement des un ou plusieurs êtres humains ou animaux dans l'environnement de la station sans fil.

14. Point d'accès (10 ; 800 ; 1000) selon la revendication 13,
dans lequel le point d'accès (10 ; 800 ; 1000) est configuré pour réaliser un procédé selon l'une quelconque des revendications 7 à 10.
